# EUROPEAN PATENT APPLICATION

(11) **EP 4 539 069 A2**
(43) Date of publication of application: **16.04.2025**
(21) Application number: 24196675.3
(22) Date of filing: 27.08.2024
(51) Int. Cl.: H01G 4/30, H01G 4/232, H01G 4/12

(54) **INTERMEDIATE CONDUCTIVE RESIN LAYER FOR AN EXTERNAL ELECTRODE OF A MULTILAYER CERAMIC COMPONENT COMPRISING METAL PARTICLES AND CORE-SHELL (CORE: RESIN; SHELL: METAL) PARTICLES IN A POLYMER MATRIX**

(30) Priority: 13.10.2023 KR 20230136530
(71) Applicant: Samsung Electro-Mechanics Co., Ltd., Suwon-si, Gyeonggi-do (KR)
(72) Inventor: Kim, Seung Ah, Suwon-si, Gyeonggi-do (KR); Lee, Chae Dong, Suwon-si, Gyeonggi-do (KR); Yeon, Gyu Ho, Suwon-si, Gyeonggi-do (KR); Lee, Kang Ha, Suwon-si, Gyeonggi-do (KR)
(74) Representative: Grünecker Patent- und Rechtsanwälte PartG mbB

(57) **Abstract**

A multilayer electronic component (100) comprising a body (110) including a dielectric layer (111) and an internal electrode (121 or 122) alternately disposed with the dielectric layer (111); and an external electrode (130 or 140) disposed on the body (110) and connected to the internal electrode (121 or 122), wherein the external electrode (130 or 140) includes a conductive resin layer (132 or 142) including metal particles (132a), core-shell particles (132b) including a polymer core (132b1) and a metal shell (132b2) disposed on at least a portion of the polymer core (132b1), and a resin (132c), the conductive resin layer (132 or 142) includes a first region (R1) adjacent to the body (110) and a second region (R2) adjacent to an outside of the conductive resin layer (132 or 142), and in at least one cross section passing through the conductive resin layer (132 or 142) and the body (110), an area fraction occupied by the core-shell particles (132b) in the second region (R2) is greater than an area fraction occupied by the core-shell particles (132b) in the first region (R1). Further, the external electrode (132 or 142) includes a plating layer (133 or 143) disposed on the conductive resin layer (132 or 142), and at least some of the core-shell particles (132b) are in contact with an interface between the conductive resin layer (132 or 142) and the plating layer (133 or 143).

## Description

### CROSS-REFERENCE TO RELATED APPLICATION(S)

This application claims benefit of priority to Korean Patent Application No. 10-2023-0136530 filed on October 13, 2023 in the Korean Intellectual Property Office, the disclosure of which is incorporated herein by reference in its entirety.

### TECHNICAL FIELD

The present disclosure relates to a multilayer electronic component.

MultiLayer Ceramic Capacitors (MLCCs), multilayer electronic components, are mounted on the printed circuit boards of various electronic products, such as video display devices including liquid crystal displays (LCDs) and plasma display panels (PDPs), computers, smartphones, and mobile phones, and are chip-type condensers serving to charge or discharge electricity therein or therefrom. Such multilayer ceramic capacitors may be used as components in various electronic devices due to having a small size, high capacitance, and ease of mounting.

The product group of multilayer ceramic capacitors may be broadly divided into MCCC for IT and automotive electronics. In the case of MLCC for automotive electronics, they perform the same condenser role as MLCCs for IT, while MLCCs for automotive electronics are easily exposed to environments in which stress is concentrated in the mounting area between an external electrode and a board, and thus, to relieve such stress, excellent bending strength is required. To secure the bending strength of an MLCC, a method of applying a conductive resin layer to the external electrode has been proposed. The conductive resin layer may usually be formed of resin and metal particles dispersed within the resin.

On the other hand, if the content of metal particles contained in the conductive resin layer is reduced to improve the bending strength thereof, the metal particles may not be sufficiently disposed on the outer surface of the conductive resin layer, resulting in a decrease in plating properties, and as a result, a problem in which Equivalent Series Resistance (ESR) increases may occur.

Conversely, if the content of metal particles included in the conductive resin layer is increased to improve plating properties and ESR characteristics, the conductive resin layer may not effectively absorb bending stress, which may cause a problem in which the bending strength of an MLCC is reduced.

Accordingly, research into a conductive resin layer improving the bending strength of an MLCC and having excellent electrical properties is required.

### SUMMARY

An aspect of the present disclosure is to provide a multilayer electronic component having excellent bending strength and electrical properties.

According to an aspect of the present disclosure, a multilayer electronic component includes a body containing a dielectric layer and an internal electrode alternately disposed with the dielectric layer, and an external electrode disposed on the body and connected to the internal electrode. The external electrode includes a conductive resin layer including metal particles, core-shell particles including a polymer core and a metal shell disposed on at least a portion of the polymer core, and a resin. The conductive resin layer includes a first region adjacent to the body and a second region adjacent to an outside of the conductive resin layer. In at least one cross section passing through the conductive resin layer and the body, an area fraction occupied by the core-shell particles in the second region is greater than an area fraction occupied by the core-shell particles in the first region.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an embodiment;
FIG. 2 is an exploded perspective view schematically illustrating a body in FIG. 1;
FIG. 3 is a cross-sectional view schematically illustrating a cross-section taken along line I-I' in FIG. 1;
FIG. 4 is a cross-sectional view schematically illustrating a cross section taken along line II-II' in FIG. 1;
FIG. 5 is an enlarged view of area K1 in FIG. 3;
FIGS. 6 and 7 are each a cross-sectional view schematically illustrating a modified example of FIG. 3, where each of the modified example is a multilayer electronic component according to another embodiment; and
FIG. 8 is an image of an area adjacent to a plating layer in a conductive resin layer of a multilayer electronic component according to an embodiment, captured by a scanning electron microscope (SEM).

### DETAILED DESCRIPTION

Hereinafter, embodiments of the present disclosure will be described with reference to detailed embodiments and accompanying drawings. However, the embodiments of the present disclosure may be modified in many different forms, and the scope of the present disclosure is not limited to the embodiments described below. In addition, the embodiments of the present disclosure are provided to more completely describe the present disclosure to those skilled in the art. Therefore, the shape and size of elements in the drawings may be exaggerated for clearer explanation, and elements indicated by the same reference numerals in the drawings are the same elements.

In addition, to clearly describe the present disclosure in the drawings, parts irrelevant to the description are omitted, and the size and thickness of each component illustrated in the drawings are arbitrarily illustrated for convenience of description, and thus, the present disclosure is not necessarily limited to the illustrated embodiment. Also, components having the same function within the scope of the same concept are described using the same reference numerals. Furthermore, throughout the specification, when a certain component is said to "include," it means that it may further include other components without excluding other components unless otherwise stated.

In the drawings, the first direction may be defined as the thickness (T) direction, the second direction may be defined as the length (L) direction, and the third direction may be defined as the width (W) direction.

### Multilayer Electronic Component

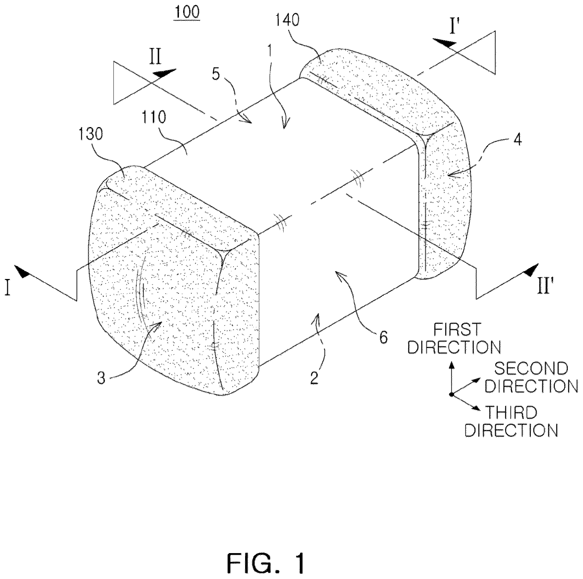

FIG. 1 is a perspective view schematically illustrating a multilayer electronic component according to an embodiment.

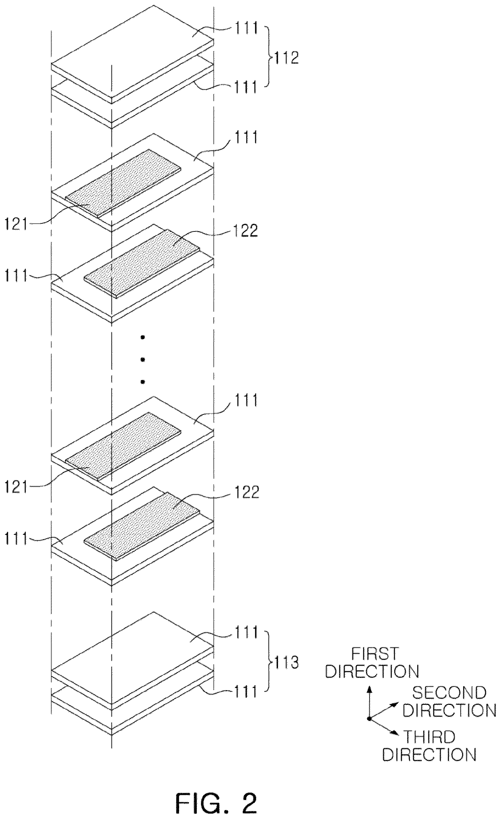

FIG. 2 is an exploded perspective view schematically illustrating a body in FIG. 1.

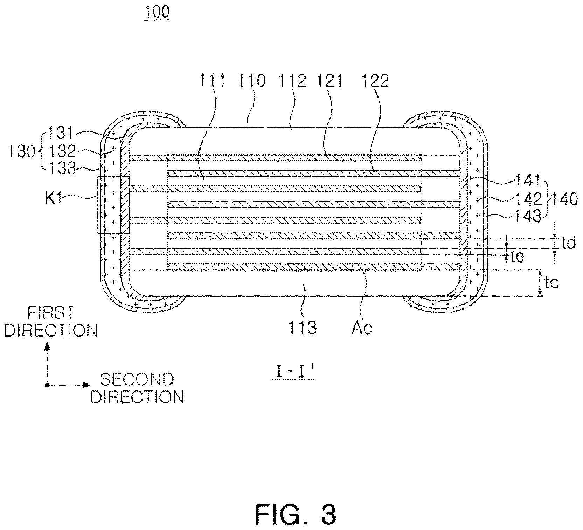

FIG. 3 is a cross-sectional view schematically illustrating a cross-section taken along line I-I' in FIG. 1.

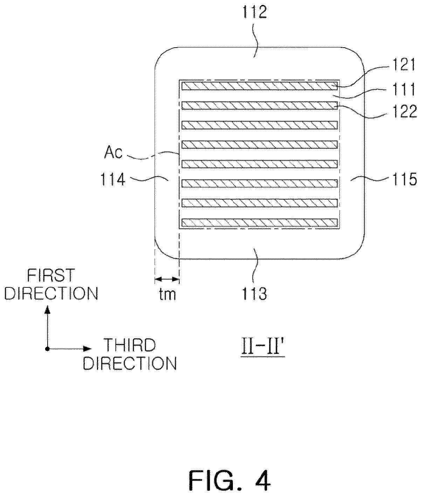

FIG. 4 is a cross-sectional view schematically illustrating a cross section taken along line II-II' in FIG. 1.

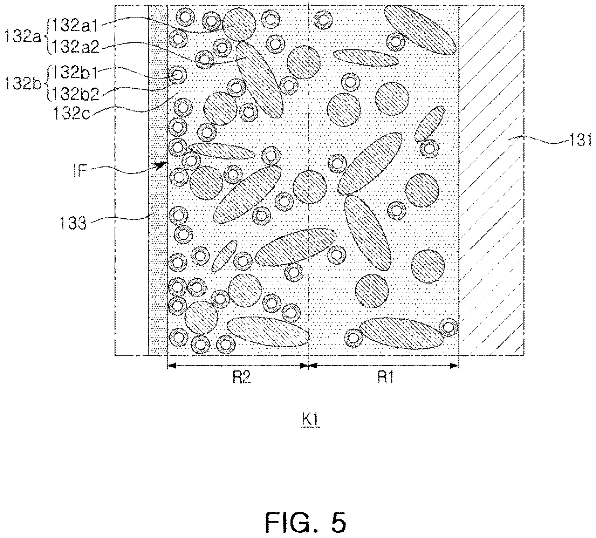

FIG. 5 is an enlarged view of area K1 in FIG. 3.

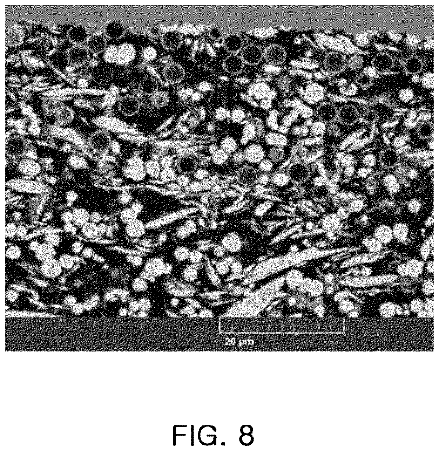

FIG. 8 is an image of an area adjacent to a plating layer in a conductive resin layer of a multilayer electronic component according to an embodiment, captured by a scanning electron microscope (SEM).

Hereinafter, a multilayer electronic component 100 according to an embodiment will be described in detail with reference to FIGS. 1 to 5. In addition, a multilayer ceramic capacitor is described as an example of a multilayer electronic component, but the present disclosure is not limited thereto and may be applied to various multilayer electronic components, such as inductors, piezoelectric elements, varistors, or thermistors.

The multilayer electronic component 100 according to an embodiment may include a body 110 including dielectric layers 111 and internal electrodes 121 and 122, and external electrodes 130 and 140.

There is no particular limitation on the detailed shape of the body 110, but as illustrated, the body 110 may have a hexahedral shape or a similar shape. Due to shrinkage of the ceramic powder particles contained in the body 110 during a sintering process or polishing of the edges of the body, the body 110 may not have a hexahedral shape with completely straight lines, but may have a substantially hexahedral shape.

The body 110 may have first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first to fourth surfaces 1, 2, 3 and 4 and opposing each other in a third direction.

The body 110 may include the dielectric layer 111 and the internal electrodes 121 and 122 alternately disposed with the dielectric layer 111. The plurality of dielectric layers 111 forming the body 110 may be in a sintered state, and the boundaries between adjacent dielectric layers 111 may be integrated to the extent that it is difficult to determine without using a scanning electron microscope (SEM).

The dielectric layer 111 may be formed by preparing a ceramic slurry containing ceramic powder, an organic solvent, and a binder, applying and drying the slurry on a carrier film to prepare a ceramic green sheet, and then sintering the ceramic green sheet. The ceramic powder is not particularly limited as long as sufficient capacitance may be obtained, but for example, barium titanate-based materials, lead composite perovskite-based materials, strontium titanate-based materials, or the like may be used. Examples of the ceramic powder may include BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) in which calcium (Ca), zirconium (Zr) or the like are partially solid-solubilized in BaTiO₃, or the like.

For example, the internal electrodes 121 and 122 may be alternately disposed with the dielectric layer 111 in the first direction. For example, the first internal electrode 121 and the second internal electrode 122, a pair of electrodes with different polarities, may be disposed to face each other with the dielectric layer 111 interposed therebetween. The first internal electrode 121 and the second internal electrode 122 may be electrically separated from each other by the dielectric layer 111 disposed therebetween.

The first internal electrode 121 is spaced apart from the fourth surface 4 and may be connected to the first external electrode 130 on the third surface 3. The second internal electrode 122 is spaced apart from the third surface 3 and may be connected to the second external electrode 140 on the fourth surface 4.

The conductive metal included in the internal electrodes 121 and 122 may be at least one of Ni, Cu, Pd, Ag, Au, Pt, Sn, W, Ti, and alloys thereof, and in more detail, may contain Ni, but the present disclosure is not limited thereto.

The internal electrodes 121 and 122 may be formed by applying a conductive paste for internal electrodes, containing a conductive metal, to a predetermined thickness on the ceramic green sheet and sintering the same. The printing method of the conductive paste for internal electrodes may be screen printing, gravure printing or the like, but the present disclosure is not limited thereto.

An average thickness td of the dielectric layer 111 does not need to be particularly limited, but may be, for example, 0.1 um to 10 um. An average thickness te of the internal electrodes 121 and 122 does not need to be particularly limited, but may be, for example, 0.1 µm to 3.0 um. Additionally, the average thickness td of the dielectric layer 111 and the average thickness of the internal electrodes 121 and 122 may be arbitrarily set depending on required characteristics or use. For example, in the case of high-voltage automotive electronic components to obtain miniaturization and high capacitance, the average thickness td of the dielectric layer 111 may be less than 2.8 um, and the average thickness te of the internal electrodes 121 and 122 may be less than 1 um. In addition, in the case of small-sized IT electronic components to obtain miniaturization and high capacitance, the average thickness td of the dielectric layer 111 may be 0.4 um or less, and the average thickness te of the internal electrodes 121 and 122 may be 0.4 um or less.

Meanwhile, in general, a major issue for high-voltage automotive electronic components is the reliability problem caused by a decrease in dielectric breakdown voltage in a high-voltage environment. In a multilayer electronic component according to an embodiment, the average thickness td of the dielectric layer 111 may be more than twice the average thickness te of the internal electrodes 121 and 122 to prevent a decrease in dielectric breakdown voltage in a high voltage environment. That is, td > 2×te may be satisfied. As a result, the dielectric breakdown voltage characteristics may be improved by increasing the thickness of the dielectric layer, which is the distance between internal electrodes.

The average thickness td of the dielectric layer 111 and the average thickness te of the internal electrodes 121 and 122 refer to the sizes of the dielectric layer 111 and the internal electrodes 121 and 122 in the first direction, respectively. The average thickness td of the dielectric layer 111 and the average thickness te of the internal electrodes 121 and 122 may be measured by scanning the cross section of the body 110 in the first and second directions with a scanning electron microscope (SEM) at 10,000X magnification. In more detail, the average thickness td of the dielectric layer 111 may be obtained by measuring the thicknesses of multiple points of one dielectric layer 111, for example, 30 points at equal intervals in the second direction and then taking the average value. In addition, the average thickness te of the internal electrodes 121 and 122 may be obtained by measuring the thicknesses of multiple points of one internal electrode 121 or 122, for example, at 30 points at equal intervals in the second direction and then taking the average value. The 30 equally spaced points may be designated in a capacitance forming portion Ac. On the other hand, if this average value measurement is respectively performed on the 10 dielectric layers 111 and the 10 internal electrodes 121 and 122 and then the average value is measured, the average thickness td of the dielectric layer 111 and the average thickness te of the internal electrodes 121 and 122 may be further generalized.

The body 110 may include a capacitance forming portion Ac disposed inside the body 110 and including first and second internal electrodes 121 and 122 alternately disposed with the dielectric layer 111 interposed therebetween to form capacitance, and a first cover portion 112 and a second cover portion 113 respectively disposed on both sides of the capacitance forming portion Ac, opposing in the first direction. The cover portions 112 and 113 may basically serve to prevent damage to the internal electrodes due to physical or chemical stress. The cover portions 112 and 113 may have the same configuration as the dielectric layer 111 except that they do not include internal electrodes.

An average thickness tc of the cover portions 112 and 113 does not need to be particularly limited. For example, the average thickness tc of the cover portions 112 and 113 may be arbitrarily set depending on required characteristics or uses. For example, to miniaturize multilayer electronic components and increase capacitance of multilayer electronic components, the average thickness tc of the cover portions 112 and 113 may be 300 um or less, 100 um or less, 30 um or less, or 20 um or less, but the present disclosure is not limited thereto. In this case, the average thickness tc of the cover portions 112 and 113 refer to the average thickness of each of the first cover portion 112 and the second cover portion 113.

The average thickness tc of the cover portions 112 and 113 may refer to the average size of the cover portions 112 and 113 in the first direction, and may be an average of the sizes in the first direction, measured at five points at equal intervals in the cross section of the body 110 in the first and second directions.

The body 110 may include a first margin portion 114 and a second margin portion 115 respectively disposed on both sides of the capacitance forming portion Ac, facing each other in the third direction. For example, the margin portions 114 and 115 may refer to the areas between both ends of the internal electrodes 121 and 122 and the boundary surface of the body 110 in a cross section of the body 110 in the first and third directions.

The margin portions 114 and 115 may include the same material as the dielectric layer 111 except that they do not include the internal electrodes 121 and 122. The margin portions 114 and 115 may basically serve to prevent damage to the internal electrodes 121 and 122 due to physical or chemical stress.

The margin portions 114 and 115 may be formed by applying conductive paste for internal electrodes on a ceramic green sheet except for areas where the margin portion is to be formed and then sintering. Alternatively, to suppress the level difference caused by the internal electrodes 121 and 122, after performing cutting so that the internal electrodes 121 and 122 are exposed to the fifth and sixth surfaces 5 and 6 of the body after lamination, a single dielectric layer or two or more dielectric layers may be stacked on both sides of the capacitance forming portion Ac opposing each other in the third direction, thereby forming the margin portions 114 and 115.

An average thickness tm of the margin portions 114 and 115 does not need to be particularly limited. For example, the average thickness tm of the margin portions 114 and 115 may be arbitrarily set depending on required characteristics or use. For example, to miniaturize multilayer electronic components and increase capacitance of multilayer electronic components, the average thickness tm of the margin portions 114 and 115 may be 100 um or less, 20 um or less, or 15 um or less, but the present disclosure is not limited thereto. In this case, the average thickness tm of the margin portions 114 and 115 refers to the average thickness of each of the first margin portion 114 and the second margin portion 115.

The average thickness tm of the margin portions 114 and 115 may refer to the average size of the margin portions 114 and 115 in the third direction, and may be the average value of the sizes thereof in the third direction measured at five equally spaced points in the cross sections of the body 110 in the first and third directions.

The external electrodes 130 and 140 may be disposed on the third and fourth surfaces 3 and 4 of the body 110, and may extend on portions of the first, second, fifth, and sixth surfaces 1, 2, 5 and 6. Additionally, the external electrodes 130 and 140 may include a first external electrode 130 connected to the first internal electrode 121 and a second external electrode 140 connected to the second internal electrode 122.

The external electrodes 130 and 140 may include, for example, base electrode layers 131 and 141 disposed on the third and fourth surfaces 3 and 4, conductive resin layers 132 and 142 disposed on the base electrode layers 131 and 141, and plating layers 133 and 143 disposed on the conductive resin layers 132 and 142. For example, the first external electrode 130 may include a first base electrode layer 131 disposed on the third surface 3, a first conductive resin layer 132 disposed on the first base electrode layer 131, and a first plating layer 133 disposed on the first conductive resin layer 132, and the second external electrode 140 may include a second base electrode layer 141 disposed on the fourth surface 4, a second conductive resin layer 142 disposed on the second base electrode layer 141, and a second plating layer 143 disposed on the second conductive resin layer 142.

The base electrode layers 131 and 141 may include, for example, metal and glass. The metal included in the base electrode layers 131 and 141 plays a role in securing electrical connectivity, and the glass plays a role in improving the bonding strength with the body 110.

The conductive metal included in the base electrode layers 131 and 141 may include Cu, Ni, Pd, Pt, Au, Ag, Pb, and/or alloys thereof, and in more detail, may include Cu, but the present disclosure is not limited thereto.

As illustrated in FIG. 3, the base electrode layers 131 and 141 may be disposed on the third and fourth surfaces 3 and 4 and extend onto at least a portion of the first and second surfaces 1 and 2. However, the present disclosure is not limited to this, and the base electrode layers 131 and 141 may be disposed, for example, between the extension line of the first surface 1 and the extension line of the second surface 2.

The base electrode layers 131 and 141 may be formed by dipping the third and fourth surfaces 3 and 4 in a conductive paste for external electrodes containing conductive metal and glass and then sintering. Alternatively, the base electrode layers 131 and 141 may be formed by transferring a sheet containing conductive metal and glass.

The conductive resin layers 132 and 142 may be disposed on the base electrode layers 131 and 141 and extend onto at least a portion of the first and second surfaces 1 and 2.

Hereinafter, the conductive resin layer 132 will be described in more detail with reference to FIG. 5. The K1 area illustrated in FIG. 5 is an enlarged portion of the first external electrode 130. The only difference is that the first external electrode 130 is connected to the first internal electrode 121, and the second external electrode 140 is connected to the second internal electrode 122. Since the configuration of the second external electrode 140 is similar, the following description of the conductive resin layer is deemed to include both the first conductive resin layer 132 and the second conductive resin layer 142.

The conductive resin layer 132 may include metal particles 132a, core-shell particles 132b including a polymer core 132b1 and a metal shell 132b2 disposed on at least a portion of the polymer core 132b1, and a resin 132c. The conductive resin layer 132 may be formed by applying and drying a conductive resin composition containing metal powder, core-shell particles, and resin on the base electrode layers 131 and 141, and then curing the conductive resin composition at a temperature of about 280°C or lower.

There are a plurality of metal particles 132a included in the conductive resin layer 132, and they may exist in a dispersed form within the resin 132c. Basically, the metal particles 132a may play a role in securing electrical connectivity, and the resin 132c may play a role in improving the bending strength of the multilayer electronic component 100 by absorbing stress. The type of resin 132c does not need to be specifically limited, but may include one or more types selected from epoxy resin, acrylic resin, and ethyl cellulose.

The type of metal particle 132a does not need to be specifically limited, but may include Cu, Ag, Ni, Pd, Sn, and alloys thereof, and in more detail, may include one or more of Cu, Ni, and Ag.

The metal particles 132a may include, for example, one or more of spherical metal particles 132a1 and flake-shaped metal particles 132a2, and in more detail, the metal particles 132a may include both spherical metal particles 132a1 and flake-shaped metal particles 132a2. The spherical metal particles 132a1 may be advantageous in terms of improving the bonding strength between the conductive resin layer 132 and the plating layer 133, and the flake-shaped metal particles 132a2 may be advantageous in terms of improving the bending strength of the multilayer electronic component 100.

In this case, the spherical metal particle 132a1 may include a shape that is not completely spherical, for example, a shape in which the length ratio of the major axis and the minor axis (major axis/minor axis) is 1.45 or less. The flake-shaped metal particle 132a2 refers to a particle having a flat and elongated shape, and is not particularly limited, but for example, the length ratio of the major axis and the minor axis (major axis/minor axis) may be 1.95 or more. The lengths of the major and minor axes of the spherical metal particles 132a1 and the flake-shaped metal particles 132a2 may be measured from images obtained by scanning cross-sections of the multilayer electronic component 100 in the first and second directions cut from the central portion in the third direction with a scanning electron microscope (SEM).

As described above, to secure electrical properties, the conductive resin layer 132 should contain a certain amount of metal particles 132a or more, and thus there is a limit to improving the bending strength of the multilayer electronic component 100. On the other hand, when the metal particles 132a are composed of only flake-shaped metal particles 132a2 to improve bending strength, side effects such as deterioration of plating properties or excessive increase in ESR may occur.

Accordingly, in the related art, spherical metal particles of a certain amount or more were added to the conductive resin layer. However, as the content of spherical metal particles increases, it is disadvantageous to improve the bending strength of multilayer electronic components. Additionally, when Ag is used as the metal particle, there is a problem in that Ag lacks stretchability and ion migration occurs. Additionally, when Cu is used as a metal particle, additional quality defects may be caused by Cu being vulnerable to oxidation.

On the other hand, according to an embodiment of the present disclosure, the conductive resin layer 132 includes core-shell particles 132b including a polymer core 132b1 and a metal shell 132b2 disposed on at least a portion of the polymer core 132b1, thereby ensuring plating properties and ESR while improving the bending strength of the multilayer electronic component 100. A plurality of core-shell particles 132b may be disposed within the conductive resin layer 132.

In detail, the polymer core 132b1 may improve the bending strength of the multilayer electronic component 100 by including a polymer that effectively absorbs stress due to the low Young's modulus thereof. In addition, the core-shell particles 132b having a polymer core 132b1 may, for example, replace a portion of the spherical metal particles 132a1 included in the conductive resin layer 132, and accordingly, may be effective in preventing ion migration due to Ag or lifting defects due to oxidation of Cu by lowering the content of the metal component contained in the conductive resin layer 132.

There is no need to specifically limit the type of polymer included in the polymer core 132b1, but it may be preferable that it is a polymer that does not thermally decompose at the curing temperature of the resin. The polymer core 132b1 may include, for example, at least one of styrene, silicone, and urethane.

If the core-shell particle 132b consists of only the polymer core 132b1, the plating property or ESR characteristics may be reduced, but since the metal shell 132b2 is disposed on the outer surface of the polymer core 132b1, plating properties and ESR characteristics may also be secured. For example, at least some of the core-shell particles 132b may contact the interface IF between the conductive resin layer 132 and the plating layer 133. For example, even if the interior of the core-shell particle 132b is composed of the polymer core 132b1, a metal shell 132b2, which may serve as a plating seed, is disposed on the outer surface of the polymer core 132b1 to ensure plating properties.

Additionally, in an embodiment, at least one of the plurality of core-shell particles 132b may contact two or more metal particles 132a. As a result, the core-shell particles 132b may improve the ESR characteristics of the multilayer electronic component 100 by providing a current path between the metal particles 132a.

There is no need to specifically limit the type of metal contained in the metal shell 132b2. The metal shell 132b2 may include one or more of, for example, Ag, Cu, Ni, Sn, and alloys thereof.

The conductive resin layer 132 may include a first region R1 adjacent to the body 110 and a second region R2 adjacent to the outside of the conductive resin layer 132. The first region R1 and the second region R2 may be regions in which the conductive resin layer 132 is equally divided into two in the thickness direction of the conductive resin layer 132. According to an embodiment, in at least one cross section passing through the conductive resin layer 132 and the body 110, the area fraction occupied by the core-shell particles 132b in the second region R2 may be greater than the area fraction occupied by the core-shell particles 132b in the first region R21.

At least one cross section passing through the body 110 may mean, for example, a cross section of the multilayer electronic component 100 in the first direction and the second direction passing through the center of the body 110 in the third direction illustrated in FIG. 5. The area fraction occupied by the core-shell particles 132b may be larger in the second region R2 than in the first region R1, thereby improving the electrical contact between the conductive resin layer 132 and the plating layer 133. For example, the core-shell particle 132b containing a metal shell 132b2 that may be a plating seed is distributed in a biased manner in the second region R2 adjacent to the interface IF between the conductive resin layer 132 and the plating layer 133, thereby improving contact between the conductive resin layer 132 and the plating layer 133.

The reason why the distribution of the core-shell particles 132b is biased toward the second region R2 is because the core-shell particles 132b have a polymer core 132b1 and are lighter than the metal particles 132a, and accordingly, the light weight core-shell particles 132b may be distributed biased in the second region R2 due to the convection phenomenon that occurs during the drying process of the conductive resin composition.

In an embodiment, in a cross section of the multilayer electronic component 100 in the first direction and the second direction, passing through the center of the body 110 in the third direction, the area fraction occupied by the core-shell particles 132b in the region within 20 um of the interface IF of the conductive resin layer 132 with the plating layer 133 may be 10% or more and 70% or less. In an embodiment, in a range within 20 um from the interface with the plating layer 133 in the second region R2, the area fraction occupied by the core-shell particles 132b may be 10% or more and 70% or less. In a case in which the area fraction occupied by the core-shell particles 132b in the region within 20 um of the interface IF of the conductive resin layer 132 with the plating layer 133 is less than 10%, the bending strength and plating property improvement effect of the present disclosure may be insignificant, and if it exceeds 70%, the distribution of the core-shell particles 132b may be excessive and the ESR of the multilayer electronic component 100 may decrease.

Hereinafter, an example of a method for measuring the area fraction occupied by the core-shell particles 132b will be described. An image of the central area in the first direction (for example, area K1 in FIG. 5) among the cross sections of the multilayer electronic component 100 in the first and second directions passing through the center of the body 110 in the third direction is obtained using a scanning electron microscope (SEM). Next, the conductive resin layer 132 in the image is equally divided into two in the thickness direction of the conductive resin layer 132. At this time, the area adjacent to the body 110 may be defined as the first region R1, and the area adjacent to the outside of the conductive resin layer 132 may be defined as the second region R2. Next, by measuring the total area of the first region R1 in the image and the area occupied by the plurality of core-shell particles 132b present in the first region R1, the area fraction of the core-shell particles 132b in the first region R1 may be measured, and by measuring the total area of the second region R2 in the image and the area occupied by the plurality of core-shell particles 132b present in the second region R2, the area fraction of the core-shell particles 132b in the second region R2 may be measured. Meanwhile, the metal particles 131a and the core-shell particles 132b may be automatically or manually determined based on information such as particle size, particle shape, and particle composition. Meanwhile, the area fraction of the core-shell particle 132b may be measured within the partial area after taking a predetermined region within the SEM image. Other methods and/or tools appreciated by one of ordinary skill in the art, even if not described in the present disclosure, may also be used.

The area fraction occupied by the core-shell particles 132b in the region within 20 um from the interface IF of the conductive resin layer 132 with the plating layer 133 may be measured in a similar manner to measuring the area fraction occupied by the core-shell particles 132b in the second region R2. The total area of the region within 20 um from the interface IF of the conductive resin layer 132 with the plating layer 133 in the image taken with a scanning electron microscope, and the area occupied by a plurality of core-shell particles 132b existing in a region within 20 um from the interface IF of the conductive resin layer 132 with the plating layer 133, may be measured, thereby measuring the area fraction occupied by the core-shell particles 132b in the region within 20 um of the interface IF of the conductive resin layer 132 with the plating layer 133.

In an embodiment, in the cross section of the multilayer electronic component 100 in the first and second directions and passing through the center of the body 110 in the third direction, the number of core-shell particles 132b in contact with the plating layer 133 may be 5 or more. In an embodiment, in the cross section of the multilayer electronic component 100 in the first and second directions and passing through the center of the body 110 in the third direction, the second region R2 may include five or more core-shell particles 132b in contact with the plating layer 133. Since the metal shell 132b2 of the core-shell particle 132b in contact with the plating layer 133 may serve as a plating seed, when the number of core-shell particles 132b in contact with the plating layer 133 is 5 or more, the effect of improving contact between the conductive resin layer 132 of the present disclosure and the plating layer 133 may become more significant. The number of core-shell particles in contact with the plating layer may be determined via SEM, either alone or in combination with energy-dispersive X-ray spectroscopy (EDS). Other methods and/or tools appreciated by one of ordinary skill in the art, even if not described in the present disclosure, may also be used.

In an embodiment, when the average particle size of the core-shell particles 132b is P1, the average particle size of the spherical metal particles 132a1 is P2, and the average particle size of the flake-shaped metal particles 132a2 is P3, P1 ≤P2≤P3 may be satisfied. It may be preferable that P1 is less than or equal to P2 and P3, from the viewpoint of improving plating properties. In addition, it may be preferable that the P3 is greater than or equal to P1 and P2 from the viewpoint of improving bending strength.

The average particle size P1 of the core-shell particles 132b does not need to be particularly limited, but may be, for example, 1 um or more and 5 um or less. If the average particle size P1 of the core-shell particles 132b is less than 1 um, the flexural strength improvement effect of the present disclosure may be minimal. In addition, if the average particle size P1 of the core-shell particles 132b is greater than 5 µm, the effect of improving plating properties of the present disclosure may be minimal.

For example, in the cross section of the multilayer electronic component 100 in the first and second directions and passing through the center of the body 110 in the third direction, after obtaining an image of the central area in the first direction (for example, area K1 in FIG. 5) with a scanning electron microscope (SEM), the P1 to P3 may be measured by analyzing the image using an image analysis program, such as the Zootos Program. Other methods and/or tools appreciated by one of ordinary skill in the art, even if not described in the present disclosure, may also be used.

The plating layers 133 and 143 may improve mounting characteristics. The type of the plating layers 133 and 143 is not particularly limited, and may be a plating layer containing Ni, Sn, Pd and/or alloys thereof, and may be formed of a plurality of layers. The plating layers 133 and 143 may be, for example, Ni plating layers or Sn plating layers, or may be formed by sequentially forming a Ni plating layer and a Sn plating layer. Additionally, the plating layers 133 and 143 may include a plurality of Ni plating layers and/or a plurality of Sn plating layers.

The drawing illustrates a structure in which the multilayer electronic component 100 has two external electrodes 130 and 140, but the structure is not limited thereto. The number or shape of the external electrodes 130 and 140 may be changed depending on the shape of the internal electrodes 121 and 122 or other uses.

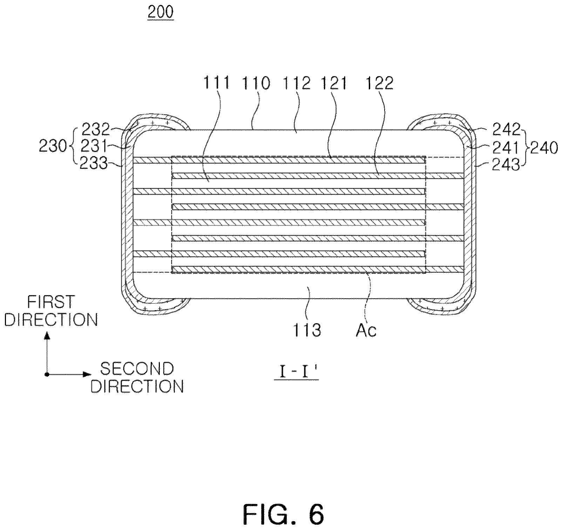

FIG. 6 is a modified example of FIG. 3 and is a cross-sectional view schematically illustrating a multilayer electronic component 200 according to another embodiment. Hereinafter, a multilayer electronic component 200 according to another embodiment will be described with reference to FIG. 6, and among the configurations of the multilayer electronic component 200, components similar to those of the above-described multilayer electronic component 100 will use the same symbols, and descriptions that overlap with those of the above-described multilayer electronic component 100 will be omitted.

The multilayer electronic component 200 according to an embodiment may include external electrodes 230 and 240 including base electrode layers 231 and 241 disposed on the third and fourth surfaces 3 and 4, conductive resin layers 232 and 242 disposed on the first and second surfaces 1 and 2, and plating layers 233 and 243 disposed on the conductive resin layers 232 and 242. In detail, the first external electrode 230 may include a first base electrode layer 231 disposed on the third surface 3, a first conductive resin layer 232 disposed on the first and second surfaces 1 and 2, and a first plating layer 233 disposed on the first conductive resin layer 232. The second external electrode 240 may include a second base electrode layer 241 disposed on the fourth surface 4, a second conductive resin layer 242 disposed on the first and second surfaces 1 and 2, and a second plating layer 243 disposed on the second conductive resin layer 242.

The plating layers 233 and 243 may extend onto the third and fourth surfaces 3 and 4 and come into contact with the base electrode layers 231 and 241. For example, the base electrode layers 231 and 241 have areas that are not covered by the conductive resin layers 232 and 242 on the third and fourth surfaces 3 and 4, and may directly contact the plating layers 233 and 243 through the above area.

For example, the base electrode layers 231 and 241 are not electrically connected to the plating layers 233 and 243 through the high-resistance conductive resin layers 232 and 242, but are in direct/physical contact with the plating layers 233 and 243. The ESR of the multilayer electronic component 200 may be improved.

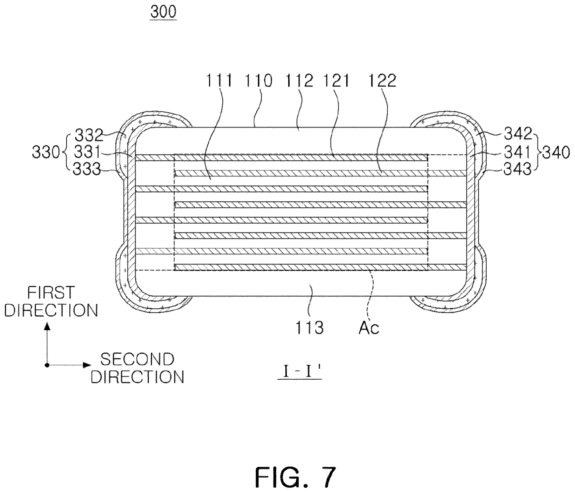

FIG. 7 is another modified example in FIG. 3 and is a cross-sectional view schematically illustrating a multilayer electronic component 300 according to another embodiment. Hereinafter, a multilayer electronic component 300 according to another embodiment will be described with reference to FIG. 7, and among the configurations of the multilayer electronic component 300, configurations similar to those of the above-described multilayer electronic component 100 will use the same symbols, and descriptions that overlap with those of the above-described multilayer electronic component 100 will be omitted.

The multilayer electronic component 300 according to an embodiment may include external electrodes 330 and 340 including base electrode layers 331 and 341 disposed on the third and fourth surfaces 3 and 4, conductive resin layers 332 and 342 disposed on the first and second surfaces 1 and 2 and extending over a portion of the base electrode layers 331 and 341, and plating layers 333 and 343 disposed on the conductive resin layers 332 and 342. In detail, the first external electrode 330 may include a first base electrode layer 331 disposed on the third surface 3, a first conductive resin layer 332 disposed on the first and second surfaces 1 and 2 and extending over a portion of the first base electrode layer 331, and a first plating layer 333 disposed on the first conductive resin layer 332. The second external electrode 340 may include a second base electrode layer 341 disposed on the fourth surface 4, a second conductive resin layer 342 disposed on the first and second surfaces 1 and 2 and extending over a portion of the second base electrode layer 341, and a second plating layer 343 disposed on the second conductive resin layer 342.

The plating layers 333 and 343 may extend onto the third and fourth surfaces 3 and 4 and come into contact with the base electrode layers 331 and 341. For example, the base electrode layers 331 and 341 have areas that are not covered by the conductive resin layers 332 and 342 on the third and fourth surfaces 3 and 4, and may directly contact the plating layers 333 and 343 through the above area. Areas not covered by the conductive resin layers 332 and 342 may be disposed on the capacitance forming portion Ac. In more detail, the size of the area not covered by the conductive resin layers 332 and 342 in the second direction may be smaller than the size of the capacitance forming portion Ac in the second direction.

The base electrode layers 331 and 341 are not electrically connected to the plating layers 333 and 343 through the high-resistance conductive resin layers 332 and 342, but are in direct/physical contact with the plating layers 333 and 343. The ESR of the multilayer electronic component 200 may be improved.

As set forth above, according to an embodiment, a multilayer electronic component having excellent bending strength and electrical properties may be provided.

The present disclosure is not limited by the above-described embodiments and accompanying drawings, but is intended to be limited by the appended claims. Therefore, various forms of substitution, modification and change will be possible by those skilled in the art within the scope of the technical spirit of the present disclosure described in the claims, and this will also be said to fall within the scope of the present disclosure.

In addition, the expression 'an embodiment' does not indicate the same embodiment, and is provided to emphasize and describe different unique characteristics. However, the embodiments presented above are not excluded from being implemented in combination with features of another embodiment. For example, even if a matter described in one specific embodiment is not described in another embodiment, it may be understood as a description related to another embodiment, unless there is a description to the contrary or contradicting the matter in another embodiment.

In addition, expressions such as first and second are used to distinguish one component from another, and do not limit the order and/or importance of the components. In some cases, without departing from the scope of rights, a first element may be named a second element, and similarly, a second element may be named a first element.

While example embodiments have been illustrated and described above, it will be apparent to those skilled in the art that modifications and variations could be made without departing from the scope of the present disclosure as defined by the appended claims.

## Claims

1. A multilayer electronic component comprising:
a body including a dielectric layer and an internal electrode alternately disposed with the dielectric layer; and
an external electrode disposed on the body and connected to the internal electrode,
wherein the external electrode includes a conductive resin layer including metal particles, core-shell particles including a polymer core and a metal shell disposed on at least a portion of the polymer core, and a resin,
the conductive resin layer includes a first region adjacent to the body and a second region adjacent to an outside of the conductive resin layer, and
in at least one cross section passing through the conductive resin layer and the body, an area fraction occupied by the core-shell particles in the second region is greater than an area fraction occupied by the core-shell particles in the first region.

2. The multilayer electronic component of claim 1, wherein the external electrode further includes a plating layer disposed on the conductive resin layer, and
at least some of the core-shell particles are in contact with an interface between the conductive resin layer and the plating layer.

3. The multilayer electronic component of claim 1, wherein the body includes a first surface and a second surface opposing each other in a first direction, a third surface and a fourth surface opposing each other in a second direction and connected to the first and second surfaces, and a fifth surface and a sixth surface opposing each other in a third direction and connected to the first to fourth surfaces,
the external electrode is disposed on the third and fourth surfaces,
the external electrode further includes a plating layer disposed on the conductive resin layer,
in a cross section of the multilayer electronic component in the first direction and the second direction, and passing through a center of the body in the third direction, a number of core-shell particles in contact with the plating layer is 5 or more.

4. The multilayer electronic component of claim 1, wherein the body includes a first surface and a second surface opposing each other in a first direction, a third surface and a fourth surface opposing each other in a second direction and connected to the first and second surfaces, and a fifth surface and a sixth surface opposing each other in a third direction and connected to the first to fourth surfaces,
the external electrode is disposed on the third and fourth surfaces,
the external electrode further includes a plating layer disposed on the conductive resin layer, and
in a cross section of the multilayer electronic component in the first direction and the second direction, and passing through a center of the body in the third direction, an area fraction occupied by the core-shell particles in a region within 20 um from an interface of the conductive resin layer and the plating layer is 10% or more and 70% or less.

5. The multilayer electronic component of claim 1, wherein at least one of the core-shell particles is in contact with two or more of the metal particles.

6. The multilayer electronic component of claim 1, wherein the metal particles include one or more of spherical metal particles and flake-shaped metal particles.

7. The multilayer electronic component of claim 6, wherein, when an average particle size of the core-shell particles is P1, an average particle size of the spherical metal particles is P2, and an average particle size of the flake-shaped metal particles is P3, P1≤P2≤P3 is satisfied.

8. The multilayer electronic component of claim 1, wherein an average particle size of the core-shell particles is 1 µm or more and 5 um or less.

9. The multilayer electronic component of claim 1, wherein the polymer core includes at least one of styrene, silicone, and urethane.

10. The multilayer electronic component of claim 1, wherein the metal shell includes at least one of Ag, Cu, Ni, Sn, and alloys thereof.

11. The multilayer electronic component of claim 1, wherein the body includes a first surface and a second surface opposing each other in a first direction, a third surface and a fourth surface opposing each other in a second direction and connected to the first and second surfaces, and a fifth surface and a sixth surface opposing each other in a third direction and connected to the first to fourth surfaces,
the external electrode further includes a base electrode layer disposed on the third and fourth surfaces and a plating layer disposed on the conductive resin layer, and
the conductive resin layer is disposed on the base electrode layer and extends on at least a portion of the first and second surfaces.

12. The multilayer electronic component of claim 1, wherein the body includes a first surface and a second surface opposing each other in a first direction, a third surface and a fourth surface opposing each other in a second direction and connected to the first and second surfaces, and a fifth surface and a sixth surface opposing each other in a third direction and connected to the first to fourth surfaces,
the external electrode further includes a base electrode layer disposed on the third and fourth surfaces and a plating layer disposed on the conductive resin layer,
the conductive resin layer is disposed on the first and second surfaces, and
the plating layer extends onto the third and fourth surfaces and is in contact with the base electrode layer.

13. The multilayer electronic component of claim 12, wherein at least a portion of the plating layer directly contacts at least a portion of the base electrode layer.

14. The multilayer electronic component of claim 13, wherein at least some of the core-shell particles are in contact with an interface between the conductive resin layer and the plating layer.

15. The multilayer electronic component of claim 13, wherein in a cross section of the multilayer electronic component in the first direction and the second direction, and passing through a center of the body in the third direction, a number of core-shell particles in contact with the plating layer is 5 or more, and an area fraction occupied by the core-shell particles in a region within 20 um from an interface of the conductive resin layer and the plating layer is 10% or more and 70% or less.
